# EUROPÄISCHE PATENTSCHRIFT

(11) **EP 3 077 253 B1**
(45) Veröffentlichungstag und Bekanntmachung des Hinweises auf die Patenterteilung: **10.01.2018**
(21) Anmeldenummer: 14799344.8
(22) Anmeldetag: 13.11.2014
(51) Int. Cl.: B60R 25/045

(54) **SYSTEM UND VERFAHREN ZUM STILLLEGEN EINES UNRECHTMÄSSIG BENUTZTEN FAHRZEUGES**
SYSTEM AND METHOD FOR SHUTTING DOWN AN UNLAWFULLY UTILIZED VEHICLE
SYSTÈME ET PROCÉDÉ PERMETTANT D'IMMOBILISER UN VÉHICULE UTILISÉ ILLÉGALEMENT

(30) Priorität: 04.12.2013 DE 102013020333
(43) Veröffentlichungstag der Anmeldung: 12.10.2016
(73) Patentinhaber: Daimler AG, 70327 Stuttgart (DE)
(72) Erfinder: MAIHÖFER, Christian, 73574 Iggingen (DE)
(74) Vertreter: JENSEN & SON
(86) Internationale Anmeldenummer: PCT/EP2014/003044
(87) Internationale Veröffentlichungsnummer: WO 2015/082039

(56) Entgegenhaltungen:
- WO-A1-2010/013043
- US-B1- 6 615 186

## Beschreibung

Die Erfindung betrifft ein System und ein Verfahren zum Stilllegen eines unrechtmäßig benutzten Fahrzeuges.

Aus der WO 0108944 A1 ist eine Vorrichtung zum Stilllegen eines unrechtmäßig benutzten Fahrzeuges bekannt. Eine betriebsnotwendige Fahrzeugkomponente wird von einem Sicherheits-Steuergerät deaktiviert, wenn eine Deaktivierungsbedingung erfüllt ist. Ein Ausgangssignal einer Geschwindigkeitserfassung ist dem Sicherheits-Steuergerät zugeführt. Eine Deaktivierung der betriebsnotwendigen Fahrzeugkomponente erfolgt in Abhängigkeit von dem Ausgangssignal der Geschwindigkeitserfassung. Es sind Erfassungsmittel einer weiteren für den abgestellten und unbenutzten Zustand des Kraftfahrzeugs charakteristischen Größe vorgesehen zur Deaktivierung der betriebsnotwendigen Fahrzeugkomponente in Abhängigkeit von der erfassten Größe.

Bei dem Stand der Technik ist also eine Vorrichtung beschrieben, die die Gefahr einer Stilllegung eines Fahrzeuges in kritischen Situationen reduziert. Es ist nicht beschrieben, dass der Stilllegungsbefehl autorisiert erfolgen muss und dadurch ein Missbrauch der Stilllegungsfunktion verhindert werden kann.

Die WO 2010/013043 A1 offenbart ein Verfahren, eine Vorrichtung und ein System zur Identifikation und Stilllegung eines motorisierten Fahrzeuges. Es umfasst eine Übertragung eines Aktivierungssignals von einer Fernbedienungsvorrichtung an eine Identifizierungsvorrichtung in dem Fahrzeug, wobei das Aktivierungssignal dazu ausgelegt ist die Identifizierungsvorrichtung zu aktivieren. Die Identifizierungsvorrichtung sendet automatisch ein Identifikationssignal, welches Identifikationsdaten des Fahrzeuges umfasst, an die Fernbedienungsvorrichtung. Die Fernbedienungsvorrichtung fragt eine mit dieser verbundenen Datenbank an. Entsprechend dem Abfrageergebnis wird ein Stoppsignal von der Fernbedienungsvorrichtung an die Identifizierungsvorrichtung gesendet, wenn die Abfrage ergibt, dass Fahrzeug stillgelegt werden sollte. Das Stoppsignal ist dazu ausgebildet eine Vorrichtung zum Stilllegen des Fahrzeuges zu aktivieren. Sollte das Abfrageergebnis ergeben, dass das Fahrzeug nicht stillgelegt werden soll, wird ein Inaktivierungssignal von der Fernbedienungsvorrichtung an die Identifizierungsvorrichtung gesendet. Das Inaktivierungssignal ist dazu ausgebildet die Identifikationsvorrichtung zu inaktivieren.

Die US 6,615,186 B1 offenbart in ähnlicher Weise eine Vorrichtung, welche unter anderem auch ein Fahrzeug stilllegen kann. In der Figurenbeschreibung der Fig. 11 wird hierbei auf die Stilllegung eines Fahrzeuges näher eingegangen. Jedoch erfolgt hier lediglich eine Bestätigung der Stilllegung des Fahrzeuges durch das Steuergerät.

Bei diesem Stand der Technik sind also ein Verfahren, eine Vorrichtung und ein System beschrieben, welche das Fahrzeug stilllegen können. Es ist nicht beschrieben, dass der Stilllegungsbefehl autorisiert erfolgen muss und dadurch ein Missbrauch der Stilllegungsfunktion verhindert werden kann.
Es ist daher Aufgabe der vorliegenden Erfindung, ein System bereitzustellen, das den Missbrauch der Stilllegung von Fahrzeugen durch Unbefugte verhindert.

Diese Aufgabe wird durch das System mit den Merkmalen nach Anspruch 1 und dem Verfahren nach Anspruch 5 gelöst.

Das System zum Stilllegen eines unrechtmäßig benutzten Fahrzeuges umfasst ein erstes Steuergerät des Fahrzeuges zum Empfang eines Fahrzeugstilllegungsbefehles und einen Server, wobei der Server mit dem ersten Steuergerät verbunden ist und der Server den Fahrzeugstilllegungsbefehl an das erste Steuergerät sendet. Das erste Steuergerät frägt vor dem Stilllegen des Fahrzeuges eine Bestätigung des Fahrzeugstilllegungsbefehles bei einem externen Berechtigungssystem an und ein zweites Steuergerät leitet die Stilllegung des Fahrzeuges ein.

Unter dem Stilllegen eines unrechtmäßig benutzten Fahrzeuges versteht man beispielsweise die Deaktivierung einer betriebsnotwendigen Fahrzeugkomponente, zum Beispiel bei einem gestohlenen Fahrzeug, oder bei einem Fahrzeug, bei dem die Leasing-Gebühren nicht bezahlt wurden. Der Stilllegungsbefehl wird beispielsweise von dem Eigentümer oder Benutzer des Fahrzeuges oder der Leasingfirma generiert. Unrechtmäßig benutzt bedeutet, dass das Fahrzeug ohne die Zustimmung beispielsweise des Eigentümers oder Benutzers des Fahrzeuges benutzt wird. Das erste Steuergerät ist zum Beispiel ein Kom-Modul. Das Kom-Modul empfängt beispielsweise den Stilllegungsbefehl vom Server und befehligt das zweite Steuergerät zur Stilllegung des Fahrzeuges. Das zweite Steuergerät ist zum Beispiel das Steuergerät für eine betriebsnotwendige Fahrzeugkomponente, beispielsweise das Steuergerät des Motors. Die Stilllegung kann beispielsweise so aussehen, dass der Motor nicht mehr gestartet werden kann. Der Server ist beispielsweise außerhalb des Fahrzeuges stationiert. Der Fahrzeugstilllegungsbefehl ist zum Beispiel ein Befehl oder Codesignal, dass das Fahrzeug stillgelegt werden soll. Der Fahrzeugstilllegungsbefehl muss bei einem externen Berechtigungssystem bestätigt werden, da eine Stilllegung sonst von jedermann befehligt werden könnte. Somit wird ein Missbrauch der Stilllegung verhindert. Das externe Berechtigungssystem ist zum Beispiel ein Mobil-Telefon, auf das der autorisierte Eigentümer oder Benutzter des Fahrzeuges eine Meldung bekommt, ob das Fahrzeug stillgelegt werden soll.

Vorteil des Systems ist, dass ein Missbrauch der Stilllegungsfunktion verhindert wird, da der Stilllegungsbefehl durch den autorisierten Eigentümer oder Benutzter des Fahrzeuges bestätigt werden muss.

Ein weiterer Vorteil ist, dass bereits vorhandene Einrichtungen des Fahrzeuges zur Ausführung der Stilllegung benutzt werden können. Dies verursacht keine weiteren Kosten.

Ein weiterer Vorteil ist, dass die Stilllegung des Fahrzeuges durch das zweite Steuergerät eingeleitet wird, somit erhöht sich der Schutz vor unrechtmäßiger Stilllegung des Fahrzeuges.

Eine vorteilhafte Ausgestaltung ist, dass das externe Berechtigungssystem die Bestätigung des Fahrzeugstilllegungsbefehls an den Server oder das erste Steuergerät sendet.

Das externe Berechtigungssystem ist zum Beispiel ein Mobil-Telefon, auf das der autorisierte Eigentümer oder Benutzter des Fahrzeuges eine Meldung bekommt, ob das Fahrzeug stillgelegt werden soll. Die Bestätigung ist zum Beispiel die Antwort auf die Meldung, die der autorisierte Eigentümer oder Benutzer des Fahrzeuges bekommt. Der Eigentümer oder Benutzer kann also mittels des externen Berechtigungssystems die Stilllegung des Fahrzeuges bestätigen. Diese Bestätigung, dass das Fahrzeug stillgelegt werden soll, wird an den Server oder das erste Steuergerät gesendet. Der Server verarbeitet die Bestätigung und befehligt beispielsweise das erste Steuergerät das Fahrzeug stillzulegen. Wenn die Bestätigung des Fahrzeugstilllegungsbefehles direkt an das erste Steuergerät gesendet wird, so verarbeitet das erste Steuergerät die Bestätigung und befehligt beispielsweise das zweite Steuergerät das Fahrzeug stillzulegen.

Vorteilhaft ist, dass ein Missbrauch der Stilllegungsfunktion durch die Bestätigung des Stilllegungsbefehls verhindert wird. Durch die Sendung der Bestätigung an den Server und die Verarbeitung durch den Server wird die Sicherheit durch ein zentrales System verbessert und kann besser kontrolliert werden.

Vorteilhaft ist zudem, dass durch die Sendung der Bestätigung an das erste Steuergerät nur eine kommunizierende Verbindung für die Bestätigung des Fahrzeugstilllegungsbefehles nötig ist. Vorteilhaft ist auch, dass das erste Steuergerät gut überwacht werden kann und dass das System wenig störanfällig ist.

Eine weitere vorteilhafte Ausführung ist, dass das erste Steuergerät den bestätigten Stilllegungsbefehl an das zweite Steuergerät sendet.

Der bestätigte Stilllegungsbefehl ist zum Beispiel die verschlüsselte Antwort auf die Meldung, die der autorisierte Eigentümer oder Benutzer des Fahrzeuges bekommt. Das erste Steuergerät bekommt beispielsweise vom externen Berechtigungssystem oder vom Server den bestätigten Befehl das Fahrzeug stillzulegen. Das erste Steuergerät, welches beispielsweise das Kom-Modul ist, sendet dann den Befehl an das zweite Steuergerät weiter. Das zweite Steuergerät ist zum Beispiel das Motorsteuergerät. Dieses Steuergerät leitet dann die Stilllegung des Fahrzeuges ein. Die Stilllegung kann beispielsweise so aussehen, dass der Motor nicht mehr gestartet werden kann. Beispielsweise kann in einem definierten Zeitraum nur eine definierte Anzahl an Fahrzeugen stillgelegt werden.

Vorteilhaft ist, dass das zweite Steuergerät nicht direkt vom Server oder externen Berechtigungssystem befehligt wird das Fahrzeug stillzulegen. Dies vermindert den Missbrauch der Stilllegungsfunktion und erhöht die Sicherheit der Insassen des Fahrzeuges und die Sicherheit von anderen Personen in der Umgebung des Fahrzeuges.

Eine weitere vorteilhafte Ausgestaltung ist, dass der Fahrzeugstilllegungsbefehl und die Bestätigung des Fahrzeugstilllegungsbefehles verschlüsselt sind.

Verschlüsselt bedeutet, dass der Befehl bzw. die Bestätigung des Befehls zum Stilllegen des Fahrzeuges durch ein geeignetes Programm verschlüsselt wird, um nicht durch eventuelle Dritte manipuliert zu werden.
Das Fahrzeug besitzt beispielsweise einen Schlüssel um die Fahrzeugstilllegung zu schützen, der nur mit dem passenden Gegenschlüssel überwunden werden kann, das heißt die Funktion zur Fahrzeugstilllegung benötigt einen Gegenschlüssel. Dies kann beispielsweise durch eine Signatur mit dem Gegenschlüssel erfolgen. Der Gegenschlüssel kann zum Beispiel an einem sicheren Ort verwahrt werden, beispielsweise bei einem oder wenigen für die Stilllegung berechtigten Personen.

Vorteil ist, dass durch die Verschlüsselung der Befehle der Missbrauch und die Manipulation der Stilllegungsfunktion vermindert werden.

Das Verfahren zum Stilllegen eines unrechtmäßig benutzten Fahrzeuges umfasst folgende Schritte: - Senden eines Fahrzeugstilllegungsbefehles von einem Server an ein erstes Steuergerät und - Prüfen einer Stilllegungsvoraussetzung vor der Fahrzeugstilllegung.
Das Verfahren weißt die Eigenschaft auf, dass eine Bestätigung des Fahrzeugstilllegungsbefehles vom ersten Steuergerät bei einem externen Berechtigungssystem angefragt wird und dass bei Vorliegen der Bestätigung des Fahrzeugstilllegungsbefehles und mindestens einer Stilllegungsvoraussetzung die Fahrzeugstilllegung durch ein zweites Steuergerät eingeleitet wird.

Eine Stilllegungsvoraussetzung ist eine Voraussetzung, die erfüllt sein muss, um das Fahrzeug stillzulegen. Ohne diese Voraussetzung kann die Stilllegung eines Fahrzeuges nicht eingeleitet werden. Die Stilllegungsvoraussetzung ist zum Beispiel die Voraussetzung, dass das Fahrzeug in einem abgestellten und unbenutzten Zustand ist. Die Prüfung der Stilllegungsvoraussetzung erfolgt beispielsweise über Einrichtungen zur Erfassung der Geschwindigkeit eines Fahrzeuges.

Vorteil dieses Verfahrens ist, dass das Fahrzeug nicht in kritischen Situationen stillgelegt werden kann, beispielsweise auf einem Bahnübergang, oder auf einer belebten Straße. Dies suggeriert eine hohe Sicherheit für die Insassen des stillzulegenden Fahrzeuges und für eventuelle Dritte.

Eine weitere vorteilhafte Ausgestaltung des Verfahrens ist, dass die Stilllegungsvoraussetzung eine Meldung für den Fahrer ist, dass das Fahrzeug nach einem definierten Zeitraum stillgelegt wird.

Der Fahrer bekommt beispielsweise eine Meldung auf dem Bordcomputer oder auf dem Bildschirm des Navigationsgerätes angezeigt, dass das Fahrzeug in einem definierten Zeitraum stillgelegt wird. Dieser Zeitraum ist frei definierbar. Das Fahrzeug kann erst stillgelegt werden, wenn die Bestätigung des Fahrzeugstilllegungsbefehles vorliegt und der vorher beschriebene Zeitraum nach Erhalt der Meldung abgelaufen ist.

Vorteil dieses Verfahrens ist, dass das Fahrzeug nicht in kritischen Situationen stillgelegt werden kann, beispielsweise auf einem Bahnübergang, oder auf einer belebten Straße. Der Fahrer kann sein Fahrzeug also noch an einem sicheren Ort abstellen, da er das Fahrzeug noch einen definierten Zeitraum fortbewegen kann.

Eine weitere vorteilhafte Ausführung ist, dass die Stilllegungsvoraussetzung ein abgelaufener Zeitraum ist, in dem das Fahrzeug trotz Stilllegungsbefehl noch fortbewegt werden kann.

Der Zeitraum, der ablaufen muss, um das Fahrzeug stillzulegen, ist frei definierbar. Das Fahrzeug kann also nach Empfangen des Stilllegungsbefehles noch für einen definierten Zeitraum fortbewegt werden. Erst nach Ablaufen des Zeitraumes kann das Fahrzeug stillgelegt werden. Der Zeitraum kann beispielsweise über eine im Fahrzeug eingebaute Uhr detektiert werden. Weitere Voraussetzung für die Stilllegung ist das Vorliegen der Bestätigung des Fahrzeugstilllegungsbefehles.

Vorteil dieses Verfahrens ist, dass das Fahrzeug nicht in kritischen Situationen stillgelegt werden kann, beispielsweise auf einem Bahnübergang, oder auf einer belebten Straße. Der Fahrer kann sein Fahrzeug also noch an einem sicheren Ort abstellen, da er das Fahrzeug noch einen definierten Zeitraum fortbewegen kann.

Eine weitere vorteilhafte Ausgestaltung ist, dass die Stilllegungsvoraussetzung eine abgelaufene Streckengröße ist, bis zu der das Fahrzeug trotz Stilllegungsbefehl noch fortbewegt werden kann.

Die Strecke, die ablaufen muss, um das Fahrzeug stillzulegen, ist frei definierbar. Das Fahrzeug kann also nach Empfangen des Stilllegungsbefehles noch für eine definierte Fahrstrecke fortbewegt werden. Erst nach Ablaufen der Strecke kann das Fahrzeug stillgelegt werden. Diese Strecke kann beispielsweise über den Kilometer-Stand des Fahrzeuges detektiert werden. Weitere Voraussetzung für die Stilllegung ist das Vorliegen der Bestätigung des Fahrzeugstilllegungsbefehles.

Vorteil dieses Verfahrens ist, dass das Fahrzeug nicht in kritischen Situationen stillgelegt werden kann, beispielsweise auf einem Bahnübergang, oder auf einer belebten Straße. Der Fahrer kann sein Fahrzeug also noch an einem sicheren Ort abstellen, da er das Fahrzeug noch eine definierte Fahrstrecke fortbewegen kann.

Eine weitere vorteilhafte Ausbildung des Verfahrens ist, dass die Stilllegungsvoraussetzung der Stillstand des Fahrzeuges ist.

Unter dem Stillstand des Fahrzeuges wird beispielsweise ein geparktes Fahrzeug verstanden, oder beispielsweise ein Fahrzeug, bei dem die Zündung abgestellt wurde. Als stillstehend wird ein Fahrzeug nicht angesehen, wenn lediglich die Reifen stillstehen und der Motor läuft. Auch wenn das Fahrzeug abgewürgt wird, wird kein Stillstand suggeriert. Der Stillstand kann beispielsweise über die Geschwindigkeitserfassung und die Motor- oder Öltemperatur detektiert werden.

Vorteil des Verfahrens ist, dass das Fahrzeug nicht in einer kritischen Situation beispielsweise auf einem Bahnübergang stillgelegt wird. Dies suggeriert eine hohe Sicherheit für die Insassen des Fahrzeuges.

Eine weitere vorteilhafte Weiterbildung des Verfahrens ist, dass bei bestätigtem Fahrzeugstilllegungsbefehl die Fahrzeuggeschwindigkeit bei einer definierten maximalen Fahrzeuggeschwindigkeit abgeriegelt wird.

Die Fahrzeuggeschwindigkeit eines Fahrzeuges ist beispielsweise 250 km/h. Diese Fahrzeuggeschwindigkeit wird bei bestätigtem Fahrzeugstilllegungsbefehl auf eine definierte maximale Fahrzeuggeschwindigkeit abgeriegelt. Diese maximale Geschwindigkeit kann frei definiert werden. Sie ist beispielsweise 100 km/h.
Das Fahrzeug kann also bei diesem Beispiel nach Erhalt des Fahrzeugstilllegungsbefehles nur noch maximal mit 100 km/h fortbewegt werden. Dies wird dadurch erreicht, dass beispielsweise die Motorleistung eingeschränkt wird. Die Geschwindigkeit kann beispielsweise über die Tachoanzeige oder die Raddrehzahl detektiert werden.

Vorteil dieser Weiterbildung ist, dass mögliche Diebe mit dem Fahrzeug nicht zu schnell fahren können und somit beispielsweise in kurzer Zeit über die Landesgrenze kommen könnten.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung der Ausführungsform zu verweisen. Es sollen auch die vorteilhaften Ausgestaltungen einbezogen sein, die sich aus einer beliebigen Kombination der Unteransprüche ergeben.

Die vorliegende Erfindung wird nachstehend anhand mehrerer Ausführungsbeispiele unter Bezugnahme auf die beiliegenden Zeichnungen näher erläutert. Es ist darauf hinzuweisen, dass die Zeichnungen bevorzugte Ausführungsvarianten der Erfindung zeigen, diese jedoch nicht darauf beschränken.

Die Zeichnungen jeweils in schematischer Darstellung:
- Fig.1: Grundlegender Aufbau eines Systems zum Stilllegen eines unrechtmäßig benutzten Fahrzeuges 1 mit einem ersten Steuergerät 2, einem zweiten Steuergerät 3, einem Server 4 und einem Berechtigungssystem 5 gemäß einem Ausführungsbeispiel der vorliegenden Erfindung.
- Fig. 2: Ablaufdiagramm eines Verfahrens zur Steuerung des Systems zum Stilllegen eines Fahrzeuges 1 gemäß einem Ausführungsbeispiel der vorliegenden Erfindung.
- Fig. 3: Weiteres beispielhaftes Ablaufdiagramm eines Verfahrens zur Steuerung des Systems zum Stilllegen eines Fahrzeuges 1 gemäß einem Ausführungsbeispiel der vorliegenden Erfindung.
- Fig. 4: Ablaufdiagramm eines Verfahrens zur Prüfung, ob eine Stilllegungsvoraussetzung vorliegt, gemäß einem Ausführungsbeispiel der vorliegenden Erfindung.
- Fig. 5: Ablaufdiagramm eines Verfahrens zur Steuerung des Systems zum Stilllegen eines Fahrzeuges 1 mit Abriegelung der Fahrzeuggeschwindigkeit gemäß einem Ausführungsbeispiel der vorliegenden Erfindung.

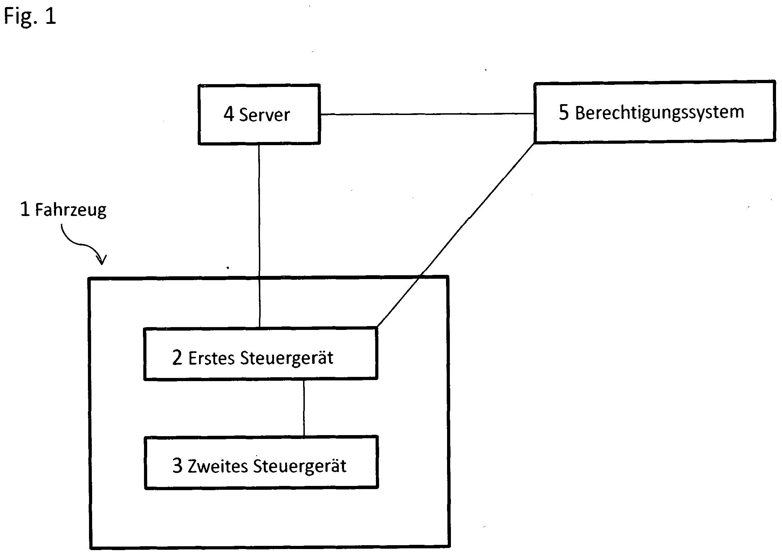

Fig. 1 zeigt den grundlegenden Aufbau eines Systems zum Stilllegen eines unrechtmäßig benutzten Fahrzeuges 1. Das System umfasst ein erstes Steuergerät 2, ein zweites Steuergerät 3, einen Server 4 und ein Berechtigungssystem 5. Das erste Steuergerät 2 und das zweite Steuergerät 3 sind Bestandteil des Fahrzeuges 1. Der Server 4 und das Berechtigungssystem 5 sind kein Bestandteil des Fahrzeuges 1. Der Server 4 bekommt beispielsweise einen Fahrzeugstilllegungsbefehl. Diesen Befehl sendet der Server 4 an das erste Steuergerät 2 weiter. Da diese Übersendung jederzeit von Dritten manipuliert werden könnte, frägt das erste Steuergerät 2 die Bestätigung der Fahrzeugstilllegung bei einem externen Berechtigungssystem 5 an. Das externe Berechtigungssystem 5 ist beispielsweise ein Mobiltelefon des Fahrzeugeigentümers oder -Benutzers. Auf dieses Mobiltelefon bekommt der Eigentümer eine Nachricht, beispielsweise eine SMS, in der er die Fahrzeugstilllegung bestätigen oder ablehnen soll. Lehnt der Eigentümer die Fahrzeugstilllegung ab, so wird ein Signal an den Server 4 oder das erste Steuergerät 2 gesendet, dass das Fahrzeug nicht stillgelegt werden soll. Bestätigt der Eigentümer oder Benutzer des Fahrzeuges die Fahrzeugstilllegung, so sendet er den Befehl an den Server 4 oder das erste Steuergerät 2, das Fahrzeug stillzulegen. Der Server 4 sendet den Stilllegungsbefehl an das erste Steuergerät 2 weiter. Das erste Steuergerät 2 prüft, ob eine Stilllegungsvoraussetzung vorliegt. Liegt eine Stilllegungsvoraussetzung vor, so sendet das erste Steuergerät 2 den Befehl an das zweite Steuergerät 3 weiter. Das zweite Steuergerät 3 leitet die Stilllegung des Fahrzeuges 1 ein. Die Stilllegung des Fahrzeuges 1 erfolgt beispielsweise über die Motorsteuerung, indem das Fahrzeug 1 beispielswiese nicht mehr gestartet werden kann.

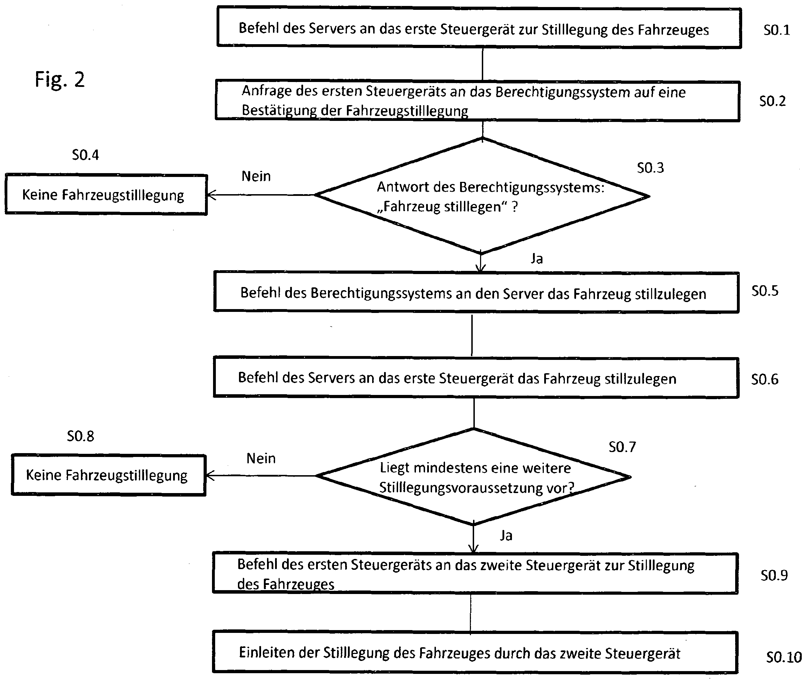

Fig. 2 zeigt ein Ablaufdiagramm eines Verfahrens zur Steuerung des Systems zum Stilllegen eines Fahrzeuges 1.
In einem ersten Schritt S0.1 sendet der Server 4 einen Befehl zur Stilllegung des Fahrzeuges 1 an das erste Steuergerät 2. Dieser Befehl kann beispielsweise mittels eines Mobilfunknetzes an das erste Steuergerät 2 gesendet werden.

In einem zweiten Schritt S0.2 frägt das erste Steuergerät 2 eine Bestätigung des Fahrzeugstilllegungsbefehles bei dem externen Berechtigungssystem 5 an. Die Anfrage kann beispielsweise mittels eines Mobilfunknetzes erfolgen.

In einem dritten Schritt S0.3 wird geprüft, ob die Antwort des Berechtigungssystems "Fahrzeug stilllegen" ist. Ist die Antwort Nein, so wird das Fahrzeug in einem Schritt S0.4 nicht stillgelegt.

Ist die Antwort in Schritt S0.3 Ja, so wird in Schritt S0.5 der Befehl zur Fahrzeugstilllegung vom Berechtigungssystem 5 an den Server 4 gesendet.

Der Server sendet wiederum in Schritt S0.6 den Befehl zur Fahrzeugstilllegung an das erste Steuergerät 2 weiter. Die Übertragungen der Daten und Befehle erfolgen verschlüsselt, wodurch eine Veränderung der Daten und Befehle durch Dritte ausgeschlossen wird.

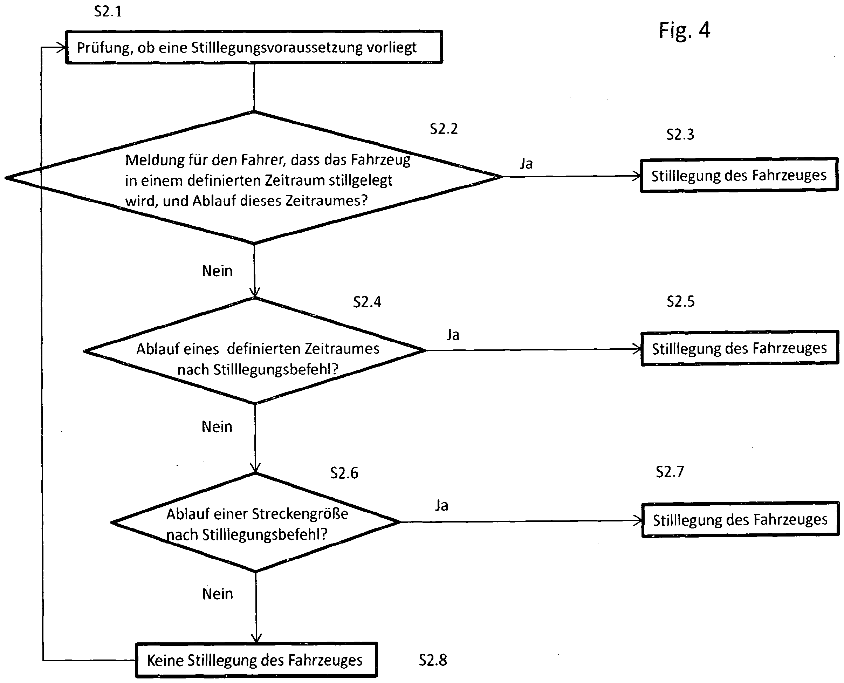

In Schritt S0.7 wird geprüft, ob zumindest eine weitere Stilllegungsvoraussetzung vorliegt. Wie die Prüfung genau erfolgt, wird in Fig. 4 beschrieben.

Liegt keine Stilllegungsvoraussetzung vor, so wird das Fahrzeug 1 in Schritt S0.8 nicht stillgelegt.

Liegt in Schritt S0.7 eine Stilllegungsvoraussetzung vor, so folgt Verfahrensschritt S0.9. Hier sendet das erste Steuergerät 2 den Befehl zur Stilllegung des Fahrzeuges 1 an das zweite Steuergerät 3.

Das zweite Steuergerät 3 leitet nun in Schritt S0.10 die Stilllegung des Fahrzeuges 1 ein. Die Stilllegung des Fahrzeuges 1 sieht beispielsweise so aus, dass das zweite Steuergerät 3, was beispielsweise die Motorsteuerung ist, die Motorleistung einschränkt oder ein Starten des Motors verhindert.

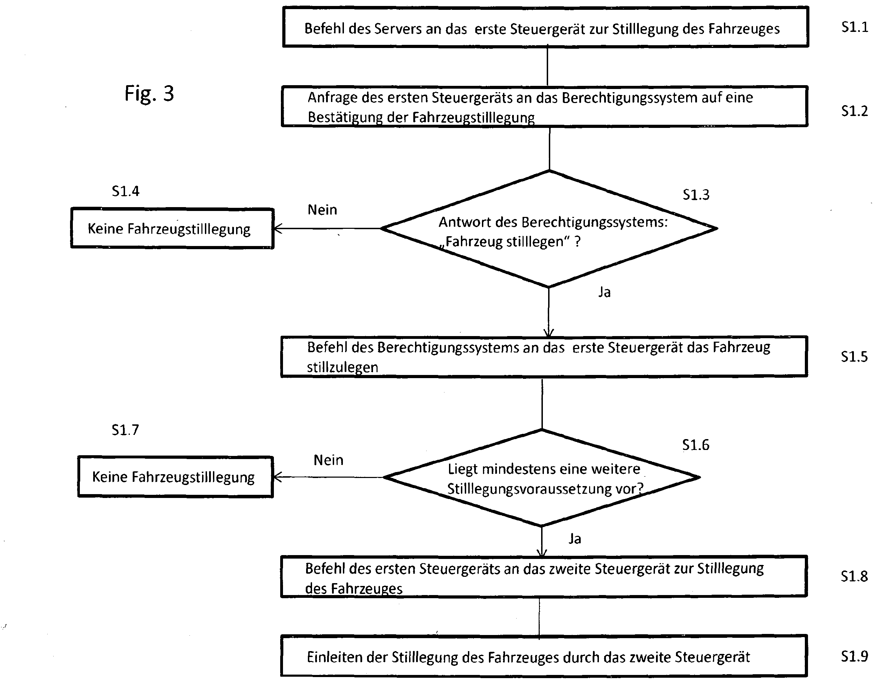

Fig. 3 zeigt ein weiteres Ablaufdiagramm eines Verfahrens zur Steuerung des Systems zum Stilllegen eines Fahrzeuges 1.
In einem ersten Schritt S1.1 sendet der Server 4 einen Befehl zur Stilllegung des Fahrzeuges 1 an das erste Steuergerät 2. Dieser Befehl kann beispielsweise mittels eines Mobilfunknetzes an das erste Steuergerät 2 gesendet werden.

In einem zweiten Schritt S1.2 frägt das erste Steuergerät 2 eine Bestätigung des Fahrzeugstilllegungsbefehles bei dem externen Berechtigungssystem 5 an. Die Anfrage kann beispielsweise mittels eines Mobilfunknetzes erfolgen.

In einem dritten Schritt S1.3 wird geprüft, ob die Antwort des Berechtigungssystems 5 "Fahrzeug stilllegen" ist. Ist die Antwort Nein, so wird das Fahrzeug 1 in einem Schritt S1.4 nicht stillgelegt.

Ist die Antwort in Schritt S1.3 Ja, so wird in Schritt S1.5 der Befehl zur Fahrzeugstilllegung vom Berechtigungssystem 5 an das erste Steuergerät 2 gesendet. Die Übertragungen der Daten und Befehle erfolgen verschlüsselt, wodurch eine Veränderung der Daten und Befehle durch Dritte ausgeschlossen wird.

In Schritt S1.6 wird geprüft, ob zumindest eine weitere Stilllegungsvoraussetzung vorliegt. Wie die Prüfung genau erfolgt, wird in Fig. 4 beschrieben.

Liegt keine Stilllegungsvoraussetzung vor, so wird das Fahrzeug 1 in Schritt S1.7 nicht stillgelegt.

Liegt in Schritt S1.6 eine Stilllegungsvoraussetzung vor, so folgt Verfahrensschritt S1.8. Hier sendet das erste Steuergerät 2 den Befehl zur Stilllegung des Fahrzeuges 1 an das zweite Steuergerät 3.

Das zweite Steuergerät 3 leitet nun in Schritt S1.9 die Stilllegung des Fahrzeuges 1 ein. Die Stilllegung des Fahrzeuges 1 sieht beispielsweise so aus, dass das zweite Steuergerät 3, was beispielsweise die Motorsteuerung ist, die Motorfunktionen einschränkt oder ein Starten des Motors verhindert.

Fig. 4 zeigt ein Ablaufdiagramm eines Verfahrens zur Prüfung, ob eine Stilllegungsvoraussetzung vorliegt. Eine Stilllegungsvoraussetzung ist eine notwendige Bedingung, die gegeben sein muss, um ein Fahrzeug stillzulegen.

In einem Schritt S2.1 wird geprüft, ob eine Stilllegungsvoraussetzung vorliegt. Die Stilllegungsvoraussetzungen sind: - eine Meldung für den Fahrer, dass das Fahrzeug 1 nach einem definierten Zeitraum T1 stillgelegt wird
- ein abgelaufener Zeitraum T2, in dem das Fahrzeug 1 trotz Stilllegungsbefehl noch fortbewegt werden kann
- eine abgelaufene Streckengröße, bis zu der das Fahrzeug 1 trotz Stilllegungsbefehl noch fortbewegt werden kann
- Abriegelung einer Fahrzeuggeschwindigkeit auf eine definierte maximale Fahrzeuggeschwindigkeit vₘₐₓ bei bestätigtem Fahrzeugstilllegungsbefehl.

In dem Verfahrensschritt S2.2 wird detektiert, ob der Fahrer des Fahrzeuges 1 eine Meldung erhalten hat, dass das Fahrzeug 1 in einem definierten Zeitraum T1 stillgelegt wird, und ob dieser Zeitraum Abgelaufen ist. Das heißt beispielsweise, dass wenn der Fahrer eine Meldung bekommt, dass das Fahrzeug 1 in 30 Minuten stillgelegt wird, so wird ab dem Zeitpunkt der Meldung die Zeit gestoppt und nach Ablauf der 30 Minuten wird das Fahrzeug 1 stillgelegt. Vor Ablauf des Zeitraumes T1 besteht keine Stilllegungsvoraussetzung.

Ist der Zeitraum T1 Abgelaufen und hat der Fahrer eine Meldung erhalten, so wird in Schritt S2.3 das Fahrzeug 1 stillgelegt.

Ist der Zeitraum T1 noch nicht Abgelaufen oder hat der Fahrer keine Meldung erhalten, so wird in Schritt S2.4 geprüft, ob ab dem Stilllegungsbefehl ein definierter Zeitraum T2 abgelaufen ist. Es wird also die Zeit ab dem Zeitpunkt des Stilllegungsbefehles gestoppt und wenn der definierte Zeitraum T2 abgelaufen ist wird das Fahrzeug 1 stillgelegt.

Ist der Zeitraum T2 abgelaufen, so wird das Fahrzeug 1 in Schritt S2.5 stillgelegt.

Ist der Zeitraum T2 noch nicht abgelaufen, so wird in Schritt S2.6 geprüft, ob eine definierte Streckengröße D1 abgelaufen ist. Das bedeutet, dass ab dem Zeitpunkt des Stilllegungsbefehles die Strecke detektiert wird, die das Fahrzeug 1 zurücklegt. Dies geschieht beispielsweise über die Prüfung des Kilometer-Standes.

Ist die Streckengröße D1 abgelaufen, so wird das Fahrzeug 1 in Schritt S2.7 stillgelegt.

Ist die Streckengröße D1 nicht abgelaufen, so wird in Schritt S2.8 geprüft, ob das Fahrzeug 1 stillsteht. Der Stillstand des Fahrzeuges 1 wird beispielsweise durch die Fahrzeuggeschwindigkeit und die Motor- oder Öltemperatur detektiert. Ist die Geschwindigkeit des Fahrzeuges 1 beispielsweise null und ist die Öltemperatur gering, so wird ein Stillstand suggeriert und das Fahrzeug 1 stillgelegt.

Steht das Fahrzeug 1 still, so wird in Schritt S2.9 das Fahrzeug 1 stillgelegt.

Steht das Fahrzeug 1 nicht still, so wird das Fahrzeug 1 in Schritt S2.10 nicht stillgelegt.

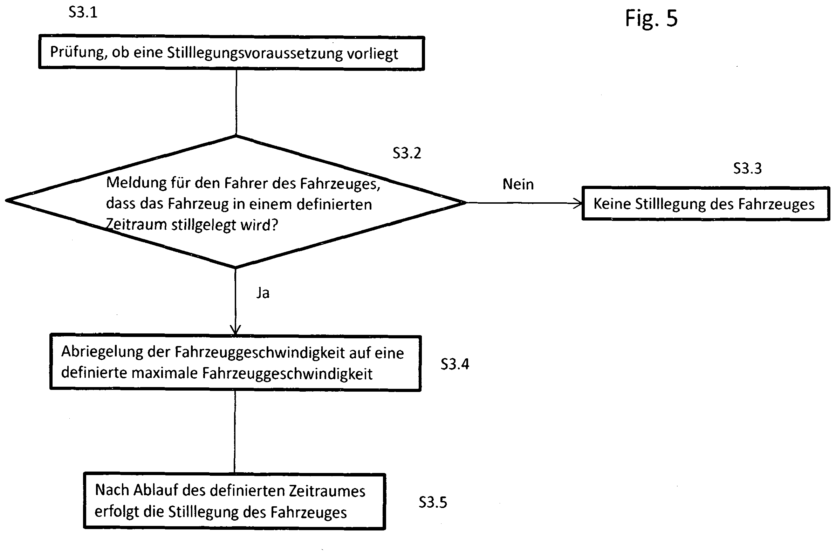

Fig. 5 zeigt ein Ablaufdiagramm eines Verfahrens zur Steuerung des Systems zum Stilllegen eines Fahrzeuges 1 mit Abriegelung der Fahrzeuggeschwindigkeit. Die Fahrzeuggeschwindigkeit eines Fahrzeuges 1 beträgt beispielsweise maximal 250 km/h. Diese maximale Fahrzeuggeschwindigkeit wird beispielsweise auf 100 km/h herabgesetzt. Dies erfolgt beispielsweise über die Drosselung der Motorleistung.

In Schritt S3.1 wird geprüft, ob eine Stilllegungsvoraussetzung vorliegt.

In Schritt S3.2 wird geprüft, ob der Fahrer eine Meldung erhalten hat, dass das Fahrzeug 1 in einem definierten Zeitraum T1 stillgelegt werden soll.

Hat der Fahrer keine Meldung erhalten, so wird in Schritt S3.3 das Fahrzeug nicht stillgelegt.

Hat der Fahrer eine Meldung erhalten, so wird in Schritt S3.4 die Fahrzeuggeschwindigkeit auf eine maximal definierte Fahrzeuggeschwindigkeit vₘₐₓ herabgesetzt.

Nach Ablauf des definierten Zeitraumes T1 wird das Fahrzeug 1 in Verfahrensschritt S3.5 stillgelegt.

Obgleich die vorliegende Erfindung vorhergehend anhand mehrerer Ausführungsbeispiele beschrieben worden ist, versteht es sich, dass die vorliegende Erfindung nicht darauf beschränkt ist, sondern dass verschiedene Änderungen und Ausgestaltungen der vorliegenden Erfindung durchgeführt werden können, ohne den Umfang der vorliegenden Erfindung zu verlassen, wie er in den beiliegenden Ansprüchen definiert ist.

## Patentansprüche

1. System zum Stilllegen eines unrechtmäßig benutzten Fahrzeuges (1), umfassend
- ein erstes Steuergerät (2) des Fahrzeuges (1) zum Empfang eines Fahrzeugstilllegungsbefehles,
- einen Server (4),
wobei der Server (4) mit dem ersten Steuergerät (2) verbunden ist und der Server (4) den Fahrzeugstilllegungsbefehl an das erste Steuergerät (2) sendet, und
- ein zweites Steuergerät (3) des Fahrzeuges (1) zum Einleiten einer Stilllegung des Fahrzeuges,
**dadurch gekennzeichnet, dass**
das erste Steuergerät (2) vor dem Stilllegen des Fahrzeuges (1) eine Bestätigung des Fahrzeugstilllegungsbefehles bei einem externen Berechtigungssystem (5) anfragt.

2. System nach Anspruch 1,
**dadurch gekennzeichnet, dass**
das externe Berechtigungssystem (5) die Bestätigung des Fahrzeugstilllegungsbefehles an
- den Server (4) oder
- das erste Steuergerät (2) sendet.

3. System nach einem der vorhergehenden Ansprüche,
**dadurch gekennzeichnet,**
**dass** das erste Steuergerät (2) den bestätigten Fahrzeugstilllegungsbefehl an das zweite Steuergerät (3) sendet.

4. System nach einem der vorhergehenden Ansprüche,
**dadurch gekennzeichnet, dass**
der Fahrzeugstilllegungsbefehl und die Bestätigung des Fahrzeugstilllegungsbefehles verschlüsselt sind.

5. Verfahren zum Stilllegen eines unrechtmäßig benutzen Fahrzeuges (1), umfassend folgende Schritte:
- Senden eines Fahrzeugstilllegungsbefehles von einem Server (4) an ein erstes Steuergerät (2)
- Prüfen einer Stilllegungsvoraussetzung vor der Fahrzeugstilllegung,
- bei Vorliegen der Bestätigung des Fahrzeugstilllegungsbefehles und mindestens einer Stilllegungsvoraussetzung die Fahrzeugstilllegung durch ein zweites Steuergerät (3) eingeleitet wird,
**dadurch gekennzeichnet, dass**
- eine Bestätigung des Fahrzeugstilllegungsbefehles vom ersten Steuergerät (2) bei einem externen Berechtigungssystem (5) angefragt wird.

6. Verfahren nach Anspruch 5,
**dadurch gekennzeichnet, dass**
die Stilllegungsvoraussetzung eine Meldung für den Fahrer ist, dass das Fahrzeug (1) nach einem definierten Zeitraum (T1) stillgelegt wird.

7. Verfahren nach einem der vorgehenden Ansprüche,
**dadurch gekennzeichnet,**
**dass** die Stilllegungsvoraussetzung ein abgelaufener Zeitraum (T2) ist, in dem das Fahrzeug (1) trotz Stilllegungsbefehl noch fortbewegt werden kann.

8. Verfahren nach einem der vorhergehenden Ansprüche,
**dadurch gekennzeichnet, dass**
die Stilllegungsvoraussetzung eine abgelaufene Streckengröße (D1) ist, bis zu der das Fahrzeug (1) trotz Stilllegungsbefehl noch fortbewegt werden kann.

9. Verfahren nach einem der vorhergehenden Ansprüche,
**dadurch gekennzeichnet, dass**
die Stilllegungsvoraussetzung der Stillstand des Fahrzeuges ist.

10. Verfahren nach einem der vorhergehenden Ansprüche,
**dadurch gekennzeichnet, dass**
bei bestätigtem Fahrzeugstilllegungsbefehl die Fahrzeuggeschwindigkeit bei einer definierten maximalen Fahrzeuggeschwindigkeit (vₘₐₓ) abgeriegelt wird.

## Claims

1. System for immobilising an unlawfully used vehicle (1), comprising
- a first control unit (2) of the vehicle (1) for receiving a vehicle immobilisation command,
- a server (4),
wherein the server (4) is connected to the first control unit (2) and the server (4) transmits the vehicle immobilisation command to the first control unit (2), and
- a second control unit (3) of the vehicle (1) for initiating an immobilisation of the vehicle,
**characterised in that**
before immobilising the vehicle (1), the first control unit (2) requests a confirmation of the vehicle immobilisation command from an external authorisation system (5).

2. System according to claim 1,
**characterised in that**
the external authorisation system (5) transmits the confirmation of the vehicle immobilisation command to
- the server (4) or
- the first control unit (2).

3. System according to any of the preceding claims,
**characterised in that**
the first control unit (2) transmits the confirmed vehicle immobilisation command to the second control unit (3).

4. System according to any of the preceding claims,
**characterised in that**
the vehicle immobilisation command and the confirmation of the vehicle immobilisation command are encrypted.

5. Method for immobilising an unlawfully used vehicle (1), comprising the following steps:
- the transmission of a vehicle immobilisation command by a server (4) to a first control unit (2),
- the checking of an immobilisation precondition before immobilising the vehicle,
- the initiation of the immobilisation of the vehicle by a second control unit (3) if the vehicle immobilisation command has been confirmed and at least one immobilisation precondition is present,
**characterised in that**
- a confirmation of the vehicle immobilisation command is requested by the first control unit (2) from an external authorisation system (5).

6. Method according to claim 5,
**characterised in that**
the immobilisation precondition is a message to the driver that the vehicle (1) will be immobilised after a defined period of time (T1).

7. Method according to any of the preceding claims,
**characterised in that**
the immobilisation precondition is an elapsed period of time (T2) in which the vehicle (1) can still be moved irrespective of the immobilisation command.

8. Method according to any of the preceding claims,
**characterised in that**
the immobilisation precondition is a size of a covered distance (D1) up to which the vehicle (1) can still be moved irrespective of the immobilisation command.

9. Method according to any of the preceding claims,
**characterised in that**
the immobilisation precondition is the stopping of the vehicle.

10. Method according to any of the preceding claims,
**characterised in that**
on confirmation of the immobilisation command the vehicle speed is blocked at a defined maximum vehicle speed (vₘₐₓ).

## Revendications

1. Système permettant d'immobiliser un véhicule automobile (1) utilisé illégalement, comprenant
- un premier appareil (2) de commande du véhicule automobile (1) destiné à recevoir une instruction d'immobilisation de véhicule automobile,
- un serveur (4), le serveur (4) étant relié au premier appareil (2) de commande et le serveur (4) envoyant l'instruction d'immobilisation de véhicule automobile au premier appareil (2) de commande, et
- un second appareil (3) de commande du véhicule automobile (1) destiné à lancer une immobilisation du véhicule automobile, **caractérisé en ce que** le premier appareil (2) de commande avant l'immobilisation du véhicule automobile (1) demande à un système (5) d'autorisation externe de confirmer l'instruction d'immobilisation de véhicule automobile

2. Système selon la revendication 1, **caractérisé en ce que** le système (5) d'autorisation externe envoie la confirmation de l'instruction d'immobilisation de véhicule automobile
- au serveur (4) ou
- au premier appareil (2) de commande.

3. Système selon l'une quelconque des revendications précédentes, **caractérisé en ce que** le premier appareil (2) de commande envoie l'instruction d'immobilisation de véhicule automobile au second appareil (3) de commande.

4. Système selon l'une quelconque des revendications précédentes, **caractérisé en ce que** l'instruction d'immobilisation de véhicule automobile et la confirmation de l'instruction d'immobilisation de véhicule automobile sont cryptées.

5. Procédé permettant d'immobiliser un véhicule automobile (1) utilisé illégalement, comprenant les étapes suivantes consistant à :
- envoyer une instruction de commande de véhicule automobile en provenance d'un serveur (4) à un premier appareil (2) de commande
- vérifier une condition d'immobilisation avant l'immobilisation du véhicule automobile,
- en présence de la confirmation de l'instruction d'immobilisation de véhicule automobile et au moins d'une condition d'immobilisation, l'immobilisation de véhicule automobile est lancée par un second appareil (3) de commande, **caractérisé en ce qu'**une confirmation de l'instruction d'immobilisation de véhicule automobile par le premier appareil (2) de commande est demandée à un système (5) d'autorisation externe

6. Procédé selon la revendication 5, **caractérisé en ce que** la condition d'immobilisation est un message au conducteur, indiquant que le véhicule (1) sera immobilisé au bout d'une durée définie (T1).

7. Procédé selon l'une quelconque des revendications précédentes, **caractérisé en ce que** la condition d'immobilisation est une durée écoulée (T2) durant laquelle le véhicule (1) peut encore se déplacer malgré l'instruction d'immobilisation.

8. Procédé selon l'une quelconque des revendications précédentes, **caractérisé en ce que** la condition d'immobilisation est une distance parcourue (D1) jusqu'à laquelle le véhicule automobile (1) peut encore se déplacer malgré l'instruction d'immobilisation.

9. Procédé selon l'une quelconque des revendications précédentes, **caractérisé en ce que** la condition d'immobilisation est l'arrêt du véhicule automobile.

10. Procédé selon l'une quelconque des revendications précédentes, **caractérisé en ce qu'**une fois l'instruction d'immobilisation de véhicule automobile confirmée, la vitesse du véhicule automobile est réglée sur une vitesse de véhicule automobile maximale définie (vₘₐₓ).
